# EUROPÄISCHE PATENTSCHRIFT

(11) **EP 3 513 055 B1**
(45) Veröffentlichungstag und Bekanntmachung des Hinweises auf die Patenterteilung: **28.07.2021**
(21) Anmeldenummer: 17765427.4
(22) Anmeldetag: 11.09.2017
(51) Int. Cl.: F02M 37/42, B01D 27/00, B01D 27/06, B01D 27/08, H01B 1/24

(54) **FILTERGEHÄUSE AUS KUNSTSTOFF UND FILTERSYSTEM**
FILTER HOUSING MADE OF PLASTIC AND FILTER SYSTEM
BOÎTIER DE FILTRE EN MATIÈRE PLASTIQUE ET SYSTÈME FILTRANT

(30) Priorität: 16.09.2016 DE 102016011157
(43) Veröffentlichungstag der Anmeldung: 24.07.2019
(73) Patentinhaber: MANN+HUMMEL GmbH, 71636 Ludwigsburg (DE)
(72) Erfinder: OPRISCH, Christine, 71739 Oberriexingen (DE); MIESS, Silke, 71640 Ludwigsburg (DE); ISING, Robin, 71634 Ludwigsburg (DE)
(74) Vertreter: Mann + Hummel Intellectual Property
(86) Internationale Anmeldenummer: PCT/EP2017/072776
(87) Internationale Veröffentlichungsnummer: WO 2018/050602

(56) Entgegenhaltungen:
- EP-A1- 0 806 564
- CN-U- 204 175 486
- US-A- 5 997 739

## Beschreibung

### Technisches Gebiet

Die Erfindung betrifft ein Filtergehäuse aus Kunststoff für ein Filtersystem zur Kraftstofffilterung, insbesondere zur Verwendung an einer Brennkraftmaschine eines Kraftfahrzeugs, sowie ein Filtersystem mit einem solchen Filtergehäuse.

### Stand der Technik

Aus der auf Kostenersparnis bei der Produktion leitfähiger Kunststoffgehäuse gerichteten DE102011078467A1 ist ein Flüssigkeitsfiltergehäuse bekannt, welches einen zweischichtig ausgeführten Gehäusetopf und einen den Gehäusetopf verschließenden Gehäusedeckel aufweist. Der Gehäusetopf und der Gehäusedeckel schließen gemeinsam einen Innenraum ein. Nur eine dem Innenraum zugewandte innere Schicht des Gehäusetopfs ist aus einem elektrisch leitfähigen Kunststoff hergestellt, wohingegen eine dem Innenraum abgewandte äußere Schicht des Gehäusetopfs aus einem elektrisch isolierenden Kunststoff hergestellt ist, da der elektrisch leitfähige Kunststoff um ein Vielfaches teurer ist als ein elektrisch nicht leitender Kunststoff. Durch die zweischichtige Ausführung des Gehäusetopfs können somit kostengünstig elektrostatische Ladungen aus dem Innenraum des Filtergehäuses an die dem Innenraum zugewandte elektrische Masse abgeführt werden.

Die innere Schicht und die äußere Schicht des Gehäusetopfs sind formschlüssig miteinander verbunden. Der Formschluss wird derart erzeugt, dass Erhöhungen an einer der beiden Schichten vorgesehen sind, die mit komplementären Vertiefungen, die an der anderen der beiden Schichten ausgebildet sind, formschlüssig zusammenwirken und in diese hineinragen. Die Erhöhungen und Vertiefungen sind jeweils ringförmig ausgeführt und verlaufen in Umfangsrichtung des Gehäusetopfs, beispielsweise über den gesamten Umfang. Die Erhöhungen und Vertiefungen können in Umfangsrichtung auch unterbrochen und damit teilringförmig ausgeführt sein. Die Erhöhungen und Vertiefungen haben jeweils einen kreissegmentförmigen Querschnitt; dadurch sind die Erhöhungen und Vertiefungen an den Übergängen abgerundet. Durch das Vorsehen der entsprechenden Radien treten an den Erhöhungen und Vertiefungen keine Spannungsspitzen auf.

Aus DE102010042562A1 ist ein als Kraftstofffilter wirkender Automobilfilter mit einem im Wesentlichen becherförmigen Gehäuse bekannt. Das Gehäuse umfasst in seinem Inneren einen Filterraum, in dem sich ein patronenförmiges Filterelement befindet. Das becherförmige Gehäuse weist einen Boden sowie eine im Wesentlichen zylindrische Gehäusewand auf. An der dem Boden gegenüberliegenden Stirnseite ist die Becherform mittels eines Deckels verschlossen. Die zylindrische Gehäusewand ist außenseitig mit einer Mehrzahl von Verformungen in Gestalt einzelner Rippen versteift, die sich schraubenförmig über die Mantelfläche der Gehäusewand hinweg erstrecken. Die Gehäusewand ist damit an ihrer Außenseite geriffelt oder gewellt gestaltet, während sie an ihrer Innenseite glatt belassen ist. Hierdurch wird die Steifigkeit des Gehäuses erhöht, ohne zusätzliches Material zu erfordern. Das derartig ausgestaltete Gehäuse der DE102010042562A1 soll im Vergleich zu herkömmlichen, dickwandigen Gehäusen die Anforderungen an Automobilfilter, insbesondere die besondere Stabilität gegen Crash-Einwirkungen, kostengünstig und ohne Gewichtserhöhung erfüllen, insbesondere sollen derartige Filter nicht gebrochen oder zerstört werden, wenn das zugehörige Automobil einen Aufprall erfährt oder etwas auf einen Filter einwirkt, wobei ein besonderes Augenmerk darauf gerichtet ist, Kraftstoffaustritt zu verhindern.

Aus dem Gebrauchsmuster CN 204 175 486 U ist ein Filtermodul mit Gehäuse, Rückhaltemitteln und elastischem Dämpferelement, das zwischen Gehäuse und Rückhaltemitteln angeordnet ist, bekannt. Das Dämpferelement dämpft Vibrationen und Geräusche und kann weiterhin elektrisch leitend ausgeführt sein, um Ladungen abzuleiten.

### Offenbarung der Erfindung

Eine Aufgabe der Erfindung ist es, ein kostengünstiges Filtergehäuse aus Kunststoff für ein Filtersystem zur Kraftstofffilterung zu schaffen, das einen mechanisch robusten und gleichzeitig elektrisch leitenden Einbau ermöglicht.

Eine weitere Aufgabe der Erfindung ist es, ein kostengünstiges Filtersystem zur Kraftstofffilterung zu schaffen, das einen mechanisch robusten und gleichzeitig elektrisch leitenden Einbau ermöglicht.

Die vorgenannte Aufgabe wird nach einem Aspekt der Erfindung gelöst von einem Filtergehäuse für ein Filtersystem zur Kraftstofffilterung nach Anspruch 1, welches ein an einem Außenumfang wenigstens eines ersten Gehäuseteils umlaufendes, elektrisch leitfähiges Entkopplungselement aufweist.

Nach einem anderen Aspekt der Erfindung wird die weitere Aufgabe durch ein Filtersystem zur Kraftstofffilterung nach Anspruch 11 gelöst, welches ein Filterelement sowie ein Filtergehäuse aufweist, wobei an einem Außenumfang wenigstens des ersten Gehäuseteils ein wenigstens teilweise umlaufendes, elektrisch leitfähiges Entkopplungselement vorgesehen ist. Das Elastizitätsmodul (E-Modul) des Entkopplungselements kann hierbei vorteilhaft kleiner sein als das E-Modul des wenigstens ersten Gehäuseteils (bei gleicher Temperatur gemessen, insbesondere bei 20 °C). Hierdurch wird zusätzlich eine mechanische Schwingungsentkopplung erreicht, insbesondere eine Schwingungsentkopplung vom Filtergehäuse zu Aufnahmen für das Filtergehäuse und/oder Halterungen für das Filtergehäuse.

Günstige Ausgestaltungen und Vorteile der Erfindung ergeben sich aus den weiteren Ansprüchen, der Beschreibung und der Zeichnung.

Es wird ein Filtergehäuse für ein Filtersystem zur Kraftstofffilterung vorgeschlagen, mit wenigstens einem Einlass und einem Auslass für ein Fluid, wobei an einem Außenumfang wenigstens eines ersten Gehäuseteils ein umlaufendes Entkopplungselement vorgesehen ist, welches elektrisch leitfähig ist. Das Filtergehäuse ist aus Kunststoff gebildet.

Das erfindungsgemäße Filtergehäuse, das für ein Filtersystem zur Kraftstofffilterung vorgesehen ist, weist wenigstens einen Einlass zur Zuführung des Kraftstoffs und einen Auslass zur Abführung des gefilterten Kraftstoffs auf. Optional kann weiter an dem Filtergehäuse auch ein weiterer Tankabfluss zur Rückführung von noch nicht gefiltertem Kraftstoff in den Kraftstofftank vorgesehen sein. Das Filtergehäuse ist zum Einbau an verschiedenen Einbauorten des Kraftfahrzeugs und in verschiedenen Einbaulagen, insbesondere vertikal und horizontal, vorgesehen. Dabei wird üblicherweise wenigstens ein Filterhalter verwendet, der das beispielsweise zylinderförmig ausgebildete Filtergehäuse an einem Außenumfang umgreift und so an einem Einbauort fixiert. Da beim Betrieb des Kraftfahrzeugs mitunter erhebliche Vibrationen auftreten, wird das Filtergehäuse durch den Filterhalter fest umschlossen an dem Einbauort eingespannt. Deshalb ist es zweckmäßig, zwischen Filterhalter und Filtergehäuse ein Entkopplungselement vorzusehen, welches mechanische Vibrationen unterdrückt und von dem Filtergehäuse fernhält, um so die Lebensdauer des Filtersystems zu erhöhen; insbesondere ist das E-Modul des Entkopplungselements hierbei vorteilhaft kleiner als das E-Modul des wenigstens ersten Gehäuseteils. Man kann auch sagen, dass das Entkopplungselement im Vergleich zum wenigstens ersten Gehäuseteil elastisch ist. Hierdurch wird auf einfache Weise zusätzlich eine mechanische Schwingungsentkopplung erreicht, insbesondere eine Schwingungsentkopplung vom Filtergehäuse zu Aufnahmen für das Filtergehäuse und/oder Halterungen für das Filtergehäuse.

Das Entkopplungselement ist erfindungsgemäß elektrisch leitend ausgeführt, um beispielsweise elektrische Oberflächenladungen von dem Filtergehäuse abzuleiten. Auch das Filtergehäuse kann zumindest teilweise aus elektrisch leitfähigem Kunststoff ausgeführt sein. Das Kraftstoffleitungssystem eines Kraftfahrzeugs kann so günstig vor elektrischer Aufladung geschützt werden.

Da der Filterhalter ein Lebensdauerbauteil ist, ist es zweckmäßig, das Entkopplungselement nicht an dem Filterhalter anzubringen, sondern an dem Filtergehäuse, da es so mit dem Filtergehäuse ausgetauscht werden kann. Damit kann einer Abnutzung wie bei üblicherweise eingesetzten Manschetten am Filterhalter vorgebeugt werden.

Das Filtergehäuse ist aus einem Kunststoff, beispielsweise aus Polyamid, ausgeführt, welcher Kunststoff insbesondere glasfaserverstärkt und/oder kohlefaserverstärkt sein kann, wodurch es auch zusätzlich elektrisch leitend ausgebildet sein kann. Das Filtergehäuse kann durch das Entkopplungselement wirksam vor Einbeulen bei festem Anziehen des Filterhalters geschützt werden. Dazu ist es vorteilhaft, das Entkopplungselement aus einem Elastomer, wie beispielsweise Ethylen-Propylen-Dien-Kautschuk (EPDM), insbesondere aus einem elektrisch leitfähigen Elastomer, vorzusehen, welches eine ausreichende elastische Funktion bei der Verbindung von Filtergehäuse und Filterhalter aufweisen kann und elektrische Ladungen von der Oberfläche ableiten kann. Elektrisch leitfähig kann EPDM beispielsweise durch Kohleeinlagerungen sein.

Das Elastomer für das Entkopplungselement kann dabei vorteilhaft auf den Außenumfang des Gehäuseteils in Form einer Wendel oder von Rippen aufgespritzt sein. Dadurch ist das Elastomer günstig gegen Ablösen während des Betriebs im Kraftfahrzeug gesichert. Beispielsweise können bei einem Entkopplungselement in Form einer Wendel freie Enden, die sich lösen könnten, mit der Wendel selbst verbunden sein. Optional kann auch ein Entkopplungselement in Form einzelner aufgespritzter Noppen vorgesehen sein. Optional können auch unterschiedlich ausgeführte Entkopplungselemente auf dem Filtergehäuse vorgesehen sein.

Erfindungsgemäß wird das Entkopplungselement, insbesondere das als Elastomer ausgeführte Entkopplungselement, zusammen mit dem insbesondere aus Kunststoff ausgebildeten Gehäuseteil in einem Zweikomponentenspritzgussprozess hergestellt. Damit ist eine besonders günstige Fertigung des Filtergehäuses möglich. Die Fertigung als Zweikomponentenspritzgussprozess reduziert zusätzlich vorteilhaft die Gefahr eines vorzeitigen Ablösens des Entkopplungselements von dem Gehäuseteil. Das E-Modul des Entkopplungselements kann in dieser Ausführungsform zusätzlich vorteilhaft kleiner als das E-Modul des wenigstens ersten Gehäuseteils sein. Hierdurch wird zusätzlich eine mechanische Schwingungsentkopplung erreicht, insbesondere eine Schwingungsentkopplung vom Filtergehäuse zu Aufnahmen für das Filtergehäuse und/oder Halterungen für das Filtergehäuse.

Bei einer von den Ansprüchen nicht umfassten Ausführungsform könnten auch fertig vorgeformte Teile des Entkopplungselements auf das Gehäuseteil aufgebracht werden, indem sie beispielsweise aufgeklebt werden.

Das erfindungsgemäße Filtergehäuse ist auf diese Weise einfach und robust an verschiedenen Einbauorten im Kraftfahrzeug zu montieren, und weist dabei durch das erfindungsgemäße, insbesondere elastische, Entkopplungselement eine hohe Lebensdauer auf. Gleichzeitig ist es durch die Ausführung als elektrisch leitfähiges Elastomer möglich, das Filtersystem vor elektrischer Aufladung zu schützen.

Gemäß einer vorteilhaften Ausgestaltung kann das Entkopplungselement aus einem elektrisch leitfähigen Elastomer gebildet sein. Damit ist es günstig möglich, die Funktion mechanische Entkopplung von Vibrationen des Kraftfahrzeugs von dem Filtergehäuse mit der Funktion des Schutzes vor elektrischer Aufladung des Filtersystems zu verbinden. Auch wird so eine günstige Lebensdauer des Filtergehäuses mit hoher Funktionalität erreicht.

Erfindungsgemäß ist das Entkopplungselement als Zweikomponententeil mit dem Filtergehäuse in einem Zweikomponentenspritzgussprozess gefertigt. Das Elastomer für das Entkopplungselement kann vorteilhaft auf den Außenumfang des Gehäuseteils in Form einer Wendel oder von Rippen aufgespritzt sein. Dadurch ist das Elastomer günstig gegen Ablösen während des Betriebs im Kraftfahrzeug gesichert. Durch eine Herstellung des Elastomers zusammen mit dem Gehäuseteil in einem Zweikomponentenspritzgussprozess ist eine besonders günstige Fertigung des Filtergehäuses möglich. Die Fertigung als Zweikomponentenspritzgussprozess reduziert zusätzlich auch vorteilhaft die Gefahr eines vorzeitigen Ablösens des Entkopplungselements von dem Gehäuseteil.

Gemäß einer vorteilhaften Ausgestaltung kann das Entkopplungselement streifenförmig umlaufend und/oder punktförmig ausgebildet sein. Das Entkopplungselement kann so günstig als Wendel oder in Form von Rippen auf den Außenumfang des Gehäuseteils aufgebracht werden. Dadurch lässt sich bei gleicher Funktion des Entkopplungselements zusätzlich vorteilhaft Material des Entkopplungselements einsparen. Alternativ können auch punktförmige Noppen auf dem Außenumfang verteilt aufgebracht werden, die aufgespritzt sein können.

Gemäß einer vorteilhaften Ausgestaltung kann das Entkopplungselement streifenförmig aufgespritzt und gegen Ablösen gesichert sein. Aufspritzen des Entkopplungselements in der streifenförmigen Form einer Wendel oder Spirale kann einen großen Flächenbereich des Außenumfangs des Gehäuseteils bei günstigem Materialeinsatz abdecken. Durch Aufspritzen lässt sich das Material des Entkopplungselements, wie beispielsweise Elastomer, auch vorteilhaft mit dem Material des Gehäuseteils, beispielsweise ein Kunststoff wie Polyamid, verbinden, so dass das Entkopplungselement sich im Betrieb nicht ablöst..

Gemäß einer vorteilhaften Ausgestaltung kann wenigstens ein Gehäuseteil an seiner axialen Stirnseite außenliegende Versteifungselemente aufweisen, welche von einem zentralen Bereich um eine Längsachse radial zu einem Außenrand des Gehäuseteils verlaufend angeordnet sind. Das Gehäuseteil, beispielsweise ein Kunststoffdeckel, ist an seiner axialen Stirnseite nicht wie bei üblichen Kunststofffiltern einfach flach oder konkav ausgeformt, sondern weist außenliegende Versteifungselemente in Form einzelner Rippen auf, welche von dem zentralen Bereich um die Längsachse, beispielsweise einem Bund des Gehäuseteils mit dem zentral angeordneten Auslass für den gefilterten Kraftstoff, strahlenförmig radial nach außen verlaufen können, um in den Außenrand des Gehäuseteils überzugehen. Die Dichtheitsanforderungen bei Verschluss der beiden Gehäuseteile können dabei durch Verschweißen oder Verkleben, insbesondere durch Ultraschallschweißen, sichergestellt werden. Hierdurch kann das Filtergehäuse hinsichtlich Druck- und Temperaturanforderungen beim erfindungsgemäßen Einsatz gegenüber einem Filtergehäuse ohne Rippen durch einfache Mittel zusätzlich günstig für erhöhte Anforderungen ausgebildet werden.

Der Kunststoffdeckel kann so in konkaver Ausführung mit speziell ausgelegten Versteifungselementen in Form von Verstärkungsrippen ausgebildet sein, um einerseits eine hohe Festigkeit beim Schweißen mittels Ultraschallverfahren auf einem Kunststoffdeckel zu erreichen, andererseits um genug Bewegung des Kunststoffdeckels in sich zu erlauben, um das Filtergehäuse bei Pulsation unter Temperatur bei hohen Drücken nicht zu beschädigen. Auch dienen die Versteifungselemente vorteilhaft einer Aussteifung des beispielsweise als SAE Stutzen ausgebildeten Auslasses, welcher in dem zentralen Bereich angeordnet ist und so bei Vibrationen durchaus erheblichen Kräften unterliegen kann. Auf diese Weise ist das Filtergehäuse geeignet für hohe Druck- und Temperaturanforderungen des Filtersystems und außerdem besonders geeignet für den Einbau am Unterboden oder im Motorraum eines Kraftfahrzeugs.

Gemäß einer vorteilhaften Ausgestaltung kann eine Höhe der Versteifungselemente in Richtung der Längsachse von dem zentralen Bereich zum Außenrand hin variieren. Günstig für eine wirkungsvolle Versteifung des als Gehäusedeckel ausgebildeten Gehäuseteils kann eine Änderung der Höhe der Versteifungselemente über ihre Erstreckung von dem zentralen Bereich zu dem Außenrand sein. Vorteilhaft kann es beispielsweise sein, wenn die Höhe von dem zentralen Bereich zum Außenrand hin abnimmt. So können zentral wirkende Kräfte, insbesondere auf den zentralen Bereich mit dem Auslass, günstig auf den Außenrand abgeleitet werden, der eine größere Steifigkeit durch die Verbindung mit dem anderen Gehäuseteil aufweist.

Gemäß einer vorteilhaften Ausgestaltung kann die Höhe der Versteifungselemente von dem zentralen Bereich zum Außenrand nichtlinear, insbesondere konkav, insbesondere hyperbelförmig verlaufen. Besonders vorteilhaft ist es, wenn die Höhe von dem zentralen Bereich zum Außenrand nichtlinear abnimmt und insbesondere konkav ausgebildet ist oder in Form einer Hyperbel von innen radial nach außen abnimmt. Insbesondere ist eine Krümmung im Verlauf der Höhe des Versteifungselements günstig für die Aufnahme und Weiterleitung von Kräften auf das Filtergehäuse. Durch eine hyperbelähnliche Rippengeometrie kann das Gehäuseteil als Gehäusedeckel besonders günstig auf hohe Druck- und Temperaturanforderungen abgestimmt sein.

Gemäß einer vorteilhaften Ausgestaltung kann an dem zweiten Gehäuseteil innenliegend ein Filterelement angeordnet sein. Wenn das zweite Gehäuseteil als Gehäusedeckel des Filtergehäuses ausgebildet ist, kann es vorteilhaft sein, das Filterelement an diesem Gehäusedeckel anzuordnen. Auf diese Weise kann das Filterelement günstig im Filtergehäuse gelagert sein. Die innenliegende Reinseite des Filterelements kann so günstig mit dem Auslass fluiddicht verbunden werden. Auch ist eine Montage des Filtersystems durch Einführen des an dem zweiten Gehäuseteil angeordneten Filterelements in das erste Gehäuseteil einfach möglich, da nach Einführen des größten Teils des Filterelements dieses von außen nicht mehr gehalten werden kann.

Gemäß einer vorteilhaften Ausgestaltung kann das Filterelement mit dem zweiten Gehäuseteil lösbar verbunden sein. Das Filterelement kann so als selbstständiges Filterelement an dem zweiten Gehäuseteil angeordnet sein, indem beispielsweise ein Stützrohr des Filterelements in eine Ausnehmung im zentralen Bereich des zweiten Gehäuseteils eingeschoben wird. Dabei kann die innenliegende Reinseite des Filterelements über eine Dichtung, beispielsweise in Form einer O-Ring-Dichtung, an der Verbindung zum Auslass abgedichtet sein. So kann das Filterelement von dem zweiten Gehäuseteil bei einem Austausch des Filterelements auch wieder gelöst werden, indem es aus der Ausnehmung herausgezogen wird.

Gemäß einer vorteilhaften Ausgestaltung kann das Filterelement mit dem zweiten Gehäuseteil fest verbunden, insbesondere verschweißt oder verklebt sein. Alternativ ist es auch möglich, das Filterelement fest mit dem zweiten Gehäuseteil zu verbinden, indem es an das zweite Gehäuseteil angeschweißt oder geklebt wird; dabei kann beispielsweise Infrarotschweißen oder Spiegelschweißen eingesetzt werden, insbesondere ist es dabei auch möglich, den Filterkörper direkt mit dem Gehäuseteil zu verbinden, also anzuschweißen oder anzukleben. Dadurch kann auf eine sonst übliche Endscheibe an dem Filterelement zur Abdichtung und mechanischen Versteifung des Filterkörpers verzichtet werden.

Gemäß einer vorteilhaften Ausgestaltung kann das erste Gehäuseteil mit dem zweiten Gehäuseteil an dem Außenrand verbunden, insbesondere verschweißt sein. Die Dichtheitsanforderungen bei Verschluss der beiden Gehäuseteile können dabei durch Verschweißen oder Verkleben, insbesondere durch Ultraschallschweißen, auf günstige Weise sichergestellt werden. Dabei können auch optimierte Geometrien der Schweißnaht in Form von radialen und/oder axialen Schweißnähten verwendet werden, um so ausreichende Dichtigkeit und Festigkeit bei hohen Drücken und/oder Temperaturen zu erreichen.

Gemäß einer vorteilhaften Ausgestaltung kann der Auslass im zentralen Bereich des zweiten Gehäuseteils angeordnet sein. Eine zentrale Abführung des gefilterten Kraftstoffs kann so mit geringem Strömungswiderstand erreicht werden, da übliche Filterelemente in Hohlzylinderform von außen nach innen durchströmt werden und so die Reinseite des Filterelements im Inneren des Filterelements angeordnet ist. Auch ist durch eine solche Anordnung des Auslasses eine mechanisch stabile Anbindung des Auslasses an das Filtergehäuse möglich, so dass auch bei höheren Druckbelastungen im Filtersystem eine ausreichende Festigkeit des Auslasses gewährleistet werden kann.

Nach einem weiteren Aspekt betrifft die Erfindung ein Filtersystem zur Kraftstofffilterung, welches ein Filterelement mit einem Filterkörper zwischen einer bestimmungsgemäßen Rohseite und einer bestimmungsgemäßen Reinseite, sowie ein Filtergehäuse aus Kunststoff, aufweist, umfassend ein erstes Gehäuseteil mit wenigstens einem Einlass und ein zweites Gehäuseteil mit wenigstens einem Auslass, in welchem Filtergehäuse das Filterelement angeordnet ist. Der Einlass ist mit der Rohseite und der Auslass mit der Reinseite fluidisch verbunden. Dabei ist an einem Außenumfang wenigstens des ersten Gehäuseteils ein wenigstens teilweise umlaufendes Entkopplungselement vorgesehen, welches elektrisch leitfähig ist.

Das Filtersystem ist zum Einbau an verschiedenen Einbauorten des Kraftfahrzeugs und in verschiedenen Einbaulagen, insbesondere vertikal und horizontal, vorgesehen. Dabei wird üblicherweise wenigstens ein Filterhalter verwendet, der das beispielsweise zylinderförmig ausgebildete Filtersystem an einem Außenumfang umgreift und so an einem Einbauort fixiert. Da beim Betrieb des Kraftfahrzeugs mitunter erhebliche Vibrationen auftreten, wird das Filtersystem durch den Filterhalter fest umschlossen an dem Einbauort eingespannt. Deshalb ist es zweckmäßig, zwischen Filterhalter und Filtergehäuse ein Entkopplungselement vorzusehen, welches mechanische Vibrationen unterdrückt und von dem Filtergehäuse fernhält, um so die Lebensdauer des Filtersystems zu erhöhen. Das Entkopplungselement ist dabei vorteilhaft elektrisch leitend ausgeführt, um beispielsweise elektrische Oberflächenladungen von dem Filtergehäuse abzuleiten.

Das Kraftstoffleitungssystem eines Kraftfahrzeugs kann so günstig vor elektrischer Aufladung geschützt werden.

Gemäß einer vorteilhaften Ausgestaltung kann das Entkopplungselement aus einem elektrisch leitfähigen Elastomer gebildet sein. Damit ist es günstig möglich, die Funktion mechanische Entkopplung von Vibrationen des Kraftfahrzeugs von dem Filtergehäuse mit der Funktion des Schutzes vor elektrischer Aufladung des Filtersystems zu verbinden. Auch wird so eine günstige Lebensdauer des Filtergehäuses mit hoher Funktionalität erreicht.

Erfindungsgemäß ist das Entkopplungselement als Kunststoffspritzgussteil, insbesondere ist der Kunststoff hierbei ein Elastomer, als Zweikomponententeil mit dem Filtergehäuse in einem Zweikomponentenspritzgussprozess gefertigt. Der Kunststoff, insbesondere das Elastomer für das Entkopplungselement, kann vorteilhaft auf den Außenumfang des Gehäuseteils in Form einer Wendel oder von Rippen aufgespritzt sein. Dadurch ist der Kunststoff, insbesondere das Elastomer, günstig gegen Ablösen während des Betriebs im Kraftfahrzeug gesichert. Durch eine Herstellung des Entkopplungselements, insbesondere aus Kunststoff, vorteilhaft als Elastomer-Entkopplungselement ausgebildet, zusammen mit dem Gehäuseteil in einem Zweikomponentenspritzgussprozess ist eine besonders günstige Fertigung des Filtergehäuses möglich. Die Fertigung als Zweikomponentenspritzgussprozess reduziert zusätzlich auch vorteilhaft die Gefahr eines vorzeitigen Ablösens des Entkopplungselements von dem Gehäuseteil.

Gemäß weiterer vorteilhafter Ausgestaltungen kann das Filterelement an dem zweiten Gehäuseteil angeordnet, insbesondere lösbar verbunden sein, oder das Filterelement, insbesondere der Filterkörper mit dem zweiten Gehäuseteil fest verbunden, insbesondere verschweißt oder verklebt sein. Das Filterelement kann so als selbstständiges Filterelement an dem zweiten Gehäuseteil angeordnet sein, indem beispielsweise ein Stützrohr des Filterelements in eine Ausnehmung im zentralen Bereich des zweiten Gehäuseteils eingeschoben wird. Dabei kann die innenliegende Reinseite des Filterelements über eine Dichtung, beispielsweise in Form einer O-Ring-Dichtung an der Verbindung zum Auslass abgedichtet sein. So kann das Filterelement von dem zweiten Gehäuseteil bei einem Austausch des Filterelements auch wieder gelöst werden, indem es aus der Ausnehmung herausgezogen wird.

Alternativ ist es auch möglich, das Filterelement fest mit dem zweiten Gehäuseteil zu verbinden, indem es an das zweite Gehäuseteil angeschweißt oder geklebt wird. Dabei kann beispielsweise Infrarotschweißen oder Spiegelschweißen eingesetzt werden. Insbesondere ist es dabei auch möglich, den Filterkörper direkt mit dem Gehäuseteil zu verbinden, also anzuschweißen oder anzukleben. Dadurch kann auf eine sonst übliche Endscheibe an dem Filterelement zur Abdichtung und mechanischen Versteifung des Filterkörpers verzichtet werden.

### Kurze Beschreibung der Zeichnungen

Weitere Vorteile ergeben sich aus der folgenden Zeichnungsbeschreibung. In den Zeichnungen sind Ausführungsbeispiele der Erfindung dargestellt. Die Zeichnungen, Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen. Es zeigen beispielhaft:
- Fig. 1: ein Filtergehäuse nach einem Ausführungsbeispiel der Erfindung in isometrischer Darstellung;
- Fig. 2: ein Filtergehäuse nach einem weiteren Ausführungsbeispiel der Erfindung in isometrischer Darstellung;
- Fig. 3: das Filtergehäuse nach Figur 2 mit montiertem Filterhalter;
- Fig. 4: ein Filtersystem ohne Entkopplungselement in teilgeschnittener isometrischer Darstellung;
- Fig. 5: ein Filtergehäuse ohne Entkopplungselement nach einem Ausführungsbeispiel der Erfindung in isometrischer Darstellung mit Sicht auf den Einlass;
- Fig. 6: das Filtersystem von Fig. 4 in einem vergrößerten Ausschnitt;
- Fig. 7: ein Filtersystem mit einem direkt verbundenen Filterelement nach einem weiteren Ausführungsbeispiel der Erfindung in einem vergrößerten Ausschnitt; und
- Fig. 8: ein zweites Gehäuseteil nach einem Ausführungsbeispiel der Erfindung im Längsschnitt.

### Ausführungsformen der Erfindung

In den Figuren sind gleiche oder gleichartige Komponenten mit gleichen Bezugszeichen beziffert. Die Figuren zeigen lediglich Beispiele und sind nicht beschränkend zu verstehen.

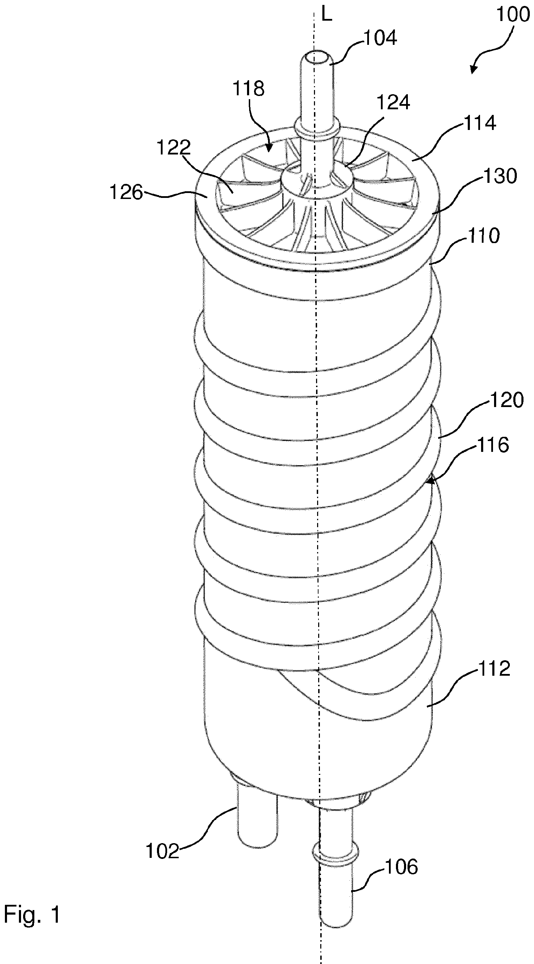

Figur 1 zeigt ein Filtergehäuse 110 nach einem Ausführungsbeispiel der Erfindung in isometrischer Darstellung. Das Filtergehäuse 110, aus Kunststoff, ist als Teil eines Filtersystems 100 zur Kraftstofffilterung mit innenliegendem Filterelement vorgesehen und weist ein erstes Gehäuseteil 112 in Form eines Gehäusetopfes sowie ein zweites Gehäuseteil 114 als Gehäusedeckel auf. Beide Gehäuseteile 112, 114 können an einem Außenrand 126 des zweiten Gehäuseteils 114 zusammengefügt werden und an der Verbindungsnaht 130 beispielsweise verschweißt sein, insbesondere mit Ultraschallschweißen. Alternativ ist auch eine Verklebung der beiden Gehäuseteile 112, 114 denkbar.

Das Filtergehäuse 110 weist wenigstens einen Einlass 102 und einen Auslass 104 für ein Fluid, insbesondere Kraftstoff auf. Der Auslass 104 ist in Längsachse L des Filtergehäuses 110 von einem zentralen Bereich 124 abgehend angeordnet. Als Benzinfilter kann das Filtergehäuse 110, wie in dem Ausführungsbeispiel in Figur 1 dargestellt, einen zusätzlichen Tankabfluss 106 zur Rückführung von ungefiltertem Kraftstoff in einen Kraftstofftank aufweisen.

An einem Außenumfang 116 des ersten Gehäuseteils 112 ist ein umlaufendes Entkopplungselement 120 vorgesehen, welches elektrisch leitfähig ist. Das Entkopplungselement 120 kann zusätzlich zur mechanischen Entkopplung des Filtergehäuses 110 mit einem im Inneren angeordneten Filterelement von Vibrationen beispielsweise bei der Anordnung in einem Kraftfahrzeug, vorgesehen sein. Hierzu kann vorteilhaft das Entkopplungselement 120 mit einem kleineren E-Modul gewählt werden als das E-Modul des ersten Gehäuseteils 112. Mit einem somit auch als elastisch bezeichenbaren Entkopplungselement 120 lassen sich zusätzlich solche mechanischen Vibrationen wirksam dämpfen. Außerdem kann das Kunststoffgehäuse auf diese Weise durch mechanische Deformation wie Einbeulen des Filtergehäuses 110 durch einen Filterhalter geschützt werden. Elektrisch leitend ist das Entkopplungselement 120 ausgeführt, um elektrische Ladungen von der Oberfläche des Filtergehäuses 110 abzuleiten.

Das Entkopplungselement 120 kann beispielsweise aus einem elektrisch leitenden Kunststoff, bevorzugt aus einem elektrisch leitfähigen Elastomer, gebildet sein und ist als Zweikomponententeil mit dem Filtergehäuse 110 zusammen gefertigt. Das Entkopplungselement 120 kann insbesondere streifenförmig umlaufend ausgebildet und beispielsweise wie in dem dargestellten Ausführungsbeispiel in Wendelform auf das Gehäuseteil 112 aufgespritzt sein. Das Entkopplungselement kann wirksam gegen Ablösen gesichert sein, indem freie Enden der Wendel zur Wendel zurückgeführt sind, wie am unteren Ende der Wendel zu erkennen ist. Die Wendel ist damit gegen ein Abschälen gesichert. Alternativ könnte das Entkopplungselement 120 auch punktförmig, beispielsweise in Noppenform, ausgebildet sein.

Das zweite Gehäuseteil 114 in Form des Gehäusedeckels weist an seiner axialen Stirnseite 118 außenliegende Versteifungselemente 122 in Rippenform auf, welche von dem zentralen Bereich 124 um die Längsachse L radial zu dem Außenrand 126 des Gehäuseteils 114 verlaufend angeordnet sind.

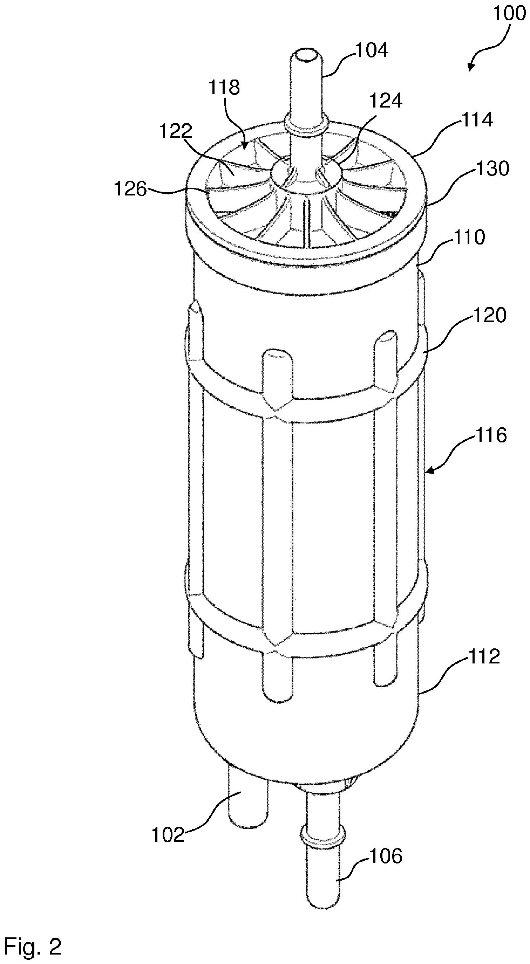

In Figur 2 ist ein Filtergehäuse 110 nach einem weiteren Ausführungsbeispiel der Erfindung in isometrischer Darstellung gezeigt. Bei diesem Ausführungsbeispiel ist das Entkopplungselement 120 in Form axial verlaufender Streifen, welche durch am Außenumfang 116 umlaufende Ringe verbunden sind, ausgeführt. Das Entkopplungselement 120 kann hierzu vorteilhaft zusätzlich mit einem kleineren E-Modul gewählt werden als das E-Modul des ersten Gehäuseteils 112. Auch mit einem solchen Entkopplungselement 120 lässt sich zusätzlich eine wirksame mechanische Dämpfung von Vibrationen sowie eine Ableitung elektrischer Ladungen von der Oberfläche des Filtergehäuses 110 erreichen.

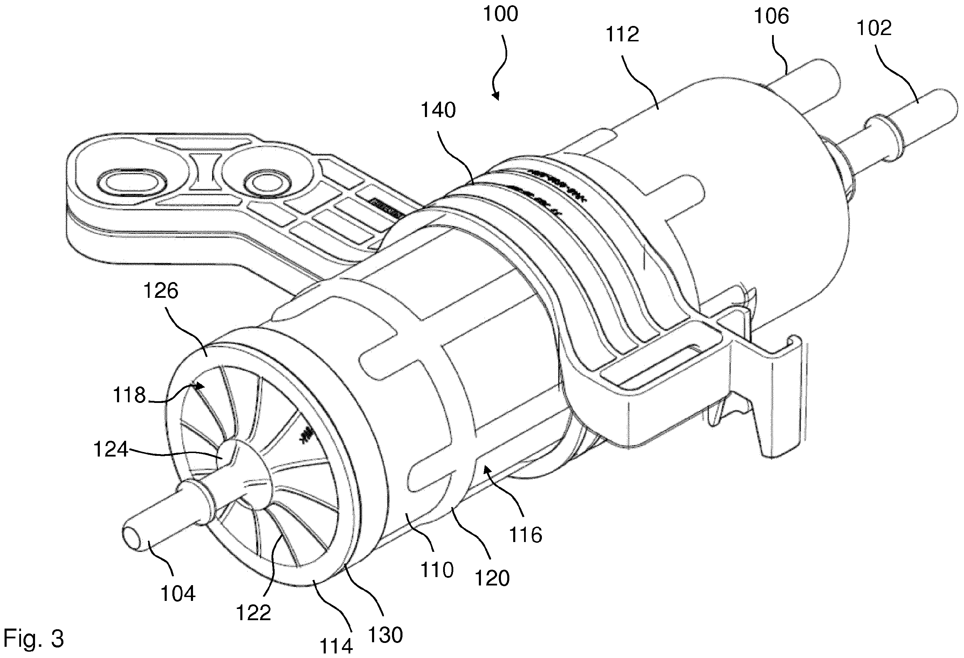

Figur 3 zeigt das Filtergehäuse 110 nach Figur 2 mit montiertem Filterhalter 140. Der Filterhalter 140, welcher an einer Fahrzeugkarosserie angebracht sein kann, kann in Form zweier aufeinanderliegender Schellen ausgeführt sein, welche das Filtergehäuse 110 fest umschließen, wenn die Schellen zusammengefügt sind. So kann das Filtergehäuse 110 mit dem Filterhalter 140 fest gehalten werden und dennoch, da der Filterhalter 140 das Filtergehäuse 110 über das Entkopplungselement 120 umgreift, vor Vibrationen geschützt sein. Gleichzeitig kann über den elektrisch leitenden Filterhalter 140, der zweckmäßigerweise aus Metall, beispielsweise als Blechteil, ausgebildet sein kann, eine elektrische Verbindung zwischen der Fahrzeugkarosserie über den Filterhalter 140 und das elektrische leitfähige Entkopplungselement 120 zu dem Filtergehäuse 110 hergestellt werden, so dass das Kraftstoffversorgungssystem besonders vorteilhaft vor elektrischer Aufladung geschützt ist.

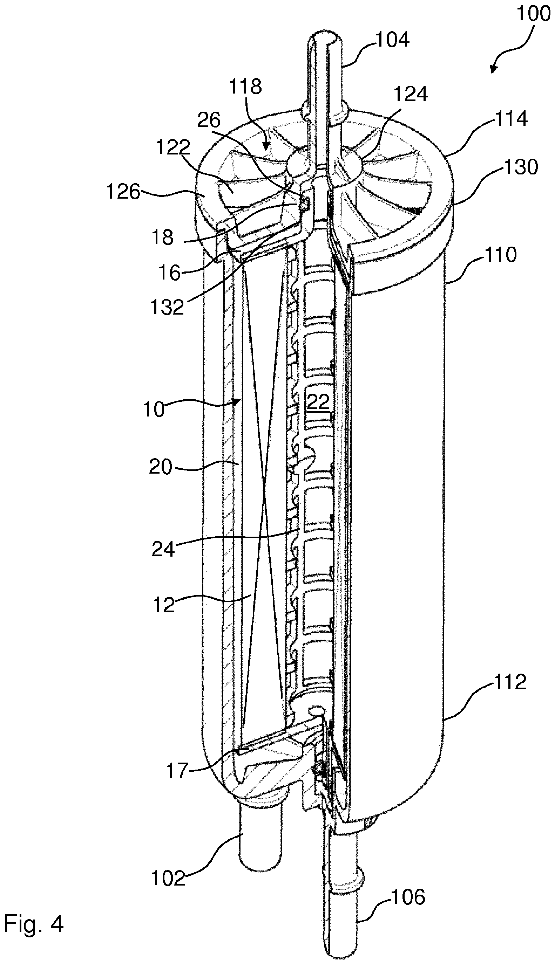

In Figur 4 ist ein Filtersystem 100 (wie in Figuren 1 bis 3 vorhergehend beschrieben) ohne Entkopplungselement 120 (zur besseren Erkennbarkeit des Filtergehäuses 110) in teilgeschnittener isometrischer Darstellung zu sehen. Das Filtersystem 100 zur Kraftstofffilterung, umfasst ein Filtergehäuse 110 aus Kunststoff wie vorstehend beschrieben mit einem ersten Gehäuseteil 112 mit einem Einlass 102 und einem zweiten Gehäuseteil 114 mit einem Auslass 104. Weiter ist an dem ersten Gehäuseteil 112 ein Tankabfluss 106 angeordnet. Im Inneren des Filtergehäuses 110 ist ein Filterelement 10 angeordnet, mit einem Filterkörper 12 zwischen einer bestimmungsgemäßen Rohseite 20 und einer bestimmungsgemäßen Reinseite 22. Der Einlass 102 des Filtergehäuses 110 ist mit der Rohseite 20 und der Auslass 104 mit der Reinseite 22 fluidisch verbunden, so dass das zu filternde Fluid, also beispielsweise Kraftstoff, über den Einlass 102 auf eine Außenseite des Filterkörpers 12, der Rohseite 20, strömen kann, dann beim Durchtritt durch den Filterkörper 12 radial von außen nach innen gefiltert wird und dort auf der Reinseite 22 axial zum Auslass 104 strömen kann. Der Filterkörper 12 ist auf seiner Innenseite durch ein Stützrohr 24 mechanisch gegen den Druck des strömenden Fluids abgestützt. Das Filterelement 10 weist als Abschluss des Filterkörpers 12 an beiden Stirnseiten Endscheiben 16, 17 auf, welche den Filterkörper 12 an den Stirnseiten konstruktiv abschließen und außerdem fluiddicht abdichten. Die auslassseitige Endscheibe 16 ist mit einem axial hervorstehenden Bund 26 ausgebildet, welcher an seiner radialen Außenseite eine Dichtung 18, beispielsweise in Form einer O-Ring-Dichtung aufweist. Über diesen Bund 26 ist das Filterelement 10 in die Ausnehmung 132 des zentralen Bereichs 124 des zweiten Gehäuseteils 114 eingeschoben und dadurch über die Dichtung 18 auf seiner Reinseite 22 zum Auslass 104 abgedichtet.

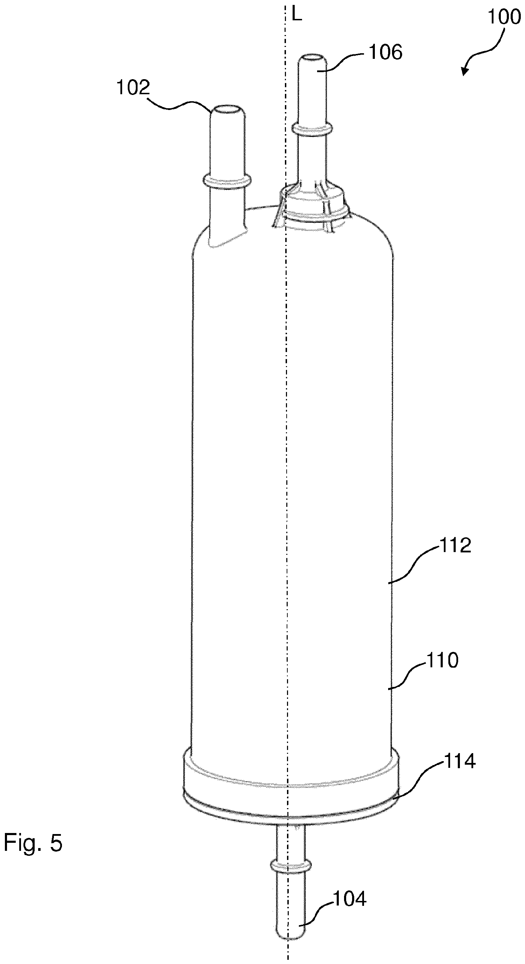

Figur 5 zeigt das Filtergehäuse 110 mit einem ersten Gehäuseteil 112 und einem zweiten Gehäuseteil 114 ohne Entkopplungselement (zur besseren Erkennbarkeit des Filtergehäuses 110) nach einem Ausführungsbeispiel der Erfindung in isometrischer Darstellung mit Sicht auf den Einlass 102 und den Tankabfluss 106. Wie ersichtlich sind Einlass 102 und Tankabfluss 106 versetzt gegen die Längsachse L angeordnet. Der Einlass 102 ist zweckmäßig zum Außenrand des Filtergehäuses 110 hin verschoben, da das (nicht gezeigte) innenliegende Filterelement 10 von dem zu filternden Kraftstoff von seiner radial außenliegenden Rohseite 20 nach innen durchströmt wird. Auf diese Weise ist der Einlass 102 möglichst nah zu der Rohseite 20 angeordnet (nicht gezeigt). Der Tankabfluss 106 kann auf der verbleibenden Fläche nah zur Längsachse L angeordnet sein.

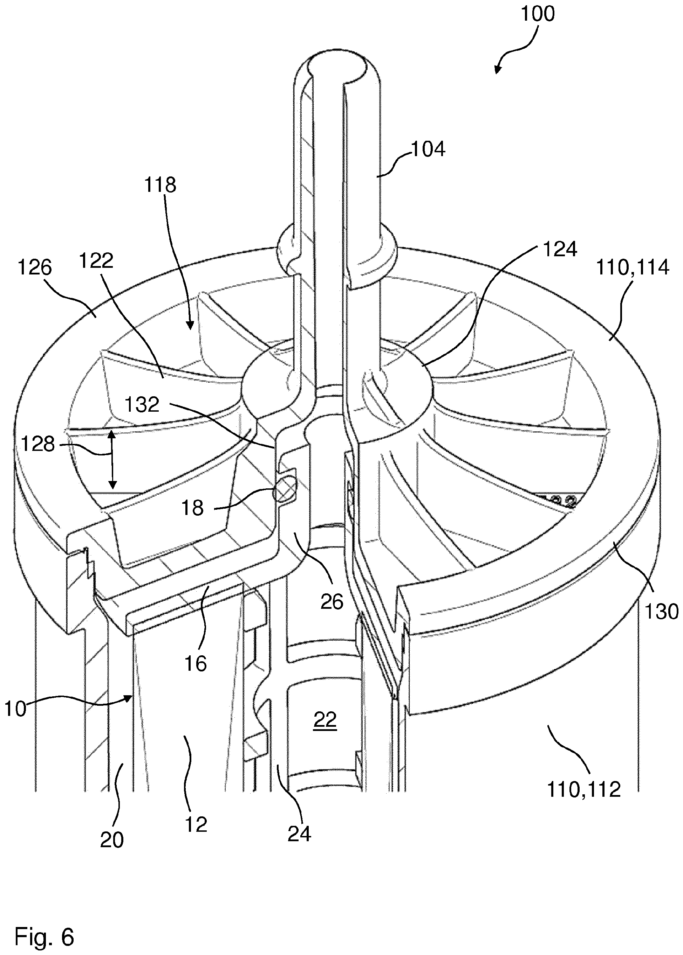

In Figur 6 ist das Filtersystem 100 von Figur 4 in einem vergrößerten Ausschnitt mit Fokus auf das zweite Gehäuseteil 114 und den Auslass 104 dargestellt. Im aufgeschnittenen Inneren des Filtergehäuses 110 ist das innen angeordnete Filterelement 10 zu erkennen. Die auslassseitige Endscheibe 16 des Filterelements 10, welche als Abschluss des Filterkörpers 12 diesen an der Stirnseite fluiddicht abschließt, ist mit dem axial hervorstehenden Bund 26 ausgebildet, welcher an seiner radialen Außenseite die Dichtung 18 in Form einer O-Ring-Dichtung aufweist. Über den Bund 26 ist das Filterelement 10 in die Ausnehmung 132 des zentralen Bereichs 124 des zweiten Gehäuseteils 114 eingeschoben und dadurch über die Dichtung 18 auf seiner Reinseite 22 zum Auslass 104 abgedichtet. Im Inneren des Filterkörpers 12 auf der Reinseite 22 des Filterelements 10 ist der Stützkörper 24 zu erkennen, der den Filterkörper 12 mechanisch gegen den Druck des strömenden Fluids abstützt. Das Filterelement 10 ist so mit dem zweiten Gehäuseteil 114 lösbar verbunden, kann also bei geöffnetem Filtergehäuse 110 auch ausgetauscht werden, indem es von dem zweiten Gehäuseteil 114 wieder abgezogen wird.

Beide Gehäuseteile 112, 114 des Filtergehäuses 110 können an dem Außenrand 126 des zweiten Gehäuseteils 114 zusammengefügt werden und an der Verbindungsnaht 130 beispielsweise verschweißt sein, insbesondere mit Ultraschallschweißen. Alternativ ist auch eine Verklebung der beiden Gehäuseteile 112, 114 denkbar.

In Figur 6 sind die an der Stirnseite 118 des zweiten Gehäuseteils 114 angeordneten Versteifungselemente 122 deutlicher zu erkennen, welche von dem als Bund ausgebildeten zentralen Bereich 124 des Gehäuseteils 114 strahlenförmig radial nach außen zum Außenrand 126 verlaufen. Die Höhe 128 der Versteifungselemente 122 in Richtung der Längsachse L (nicht gezeigt) variiert dabei beim Verlauf von dem zentralen Bereich 124 zum Außenrand 126 hin. Wie zu erkennen, nimmt die Höhe 128 der Versteifungselemente 122 von dem zentralen Bereich 124 zum Außenrand 126 hin deutlich ab. Der Verlauf der Höhe 128 ist dabei bevorzugt nichtlinear, insbesondere konkav, und insbesondere hyperbelförmig ausgebildet.

Das Gehäuseteil 114 kann so in konkaver Ausführung mit den speziell ausgelegten Versteifungselementen 122 in Form von Verstärkungsrippen ausgebildet sein, um einerseits eine hohe Festigkeit beim Schweißen mittels Ultraschallverfahren auf dem Gehäuseteil 114 zu erreichen, andererseits um genug Bewegung des Gehäuseteils 114 in sich zu erlauben, um das Filtergehäuse 110 bei Pulsation unter Temperatur bei hohen Drücken nicht zu beschädigen. Auch dienen die Versteifungselemente 122 vorteilhaft einer Aussteifung des beispielsweise als SAE Stutzen ausgebildeten Auslasses 104, welcher in dem zentralen Bereich 124 angeordnet ist und so bei Vibrationen durchaus erheblichen Kräften unterliegen kann. Auf diese Weise ist das Filtergehäuse 110 geeignet für hohe Druck- und Temperauranforderungen des Filtersystems 100 und außerdem besonders geeignet für den Einbau am Unterboden oder im Motorraum eines Kraftfahrzeugs. Durch eine solche hyperbelähnliche Rippengeometrie kann das Gehäuseteil 114 als Gehäusedeckel besonders günstig auf hohe Druck- und Temperaturanforderungen abgestimmt sein.

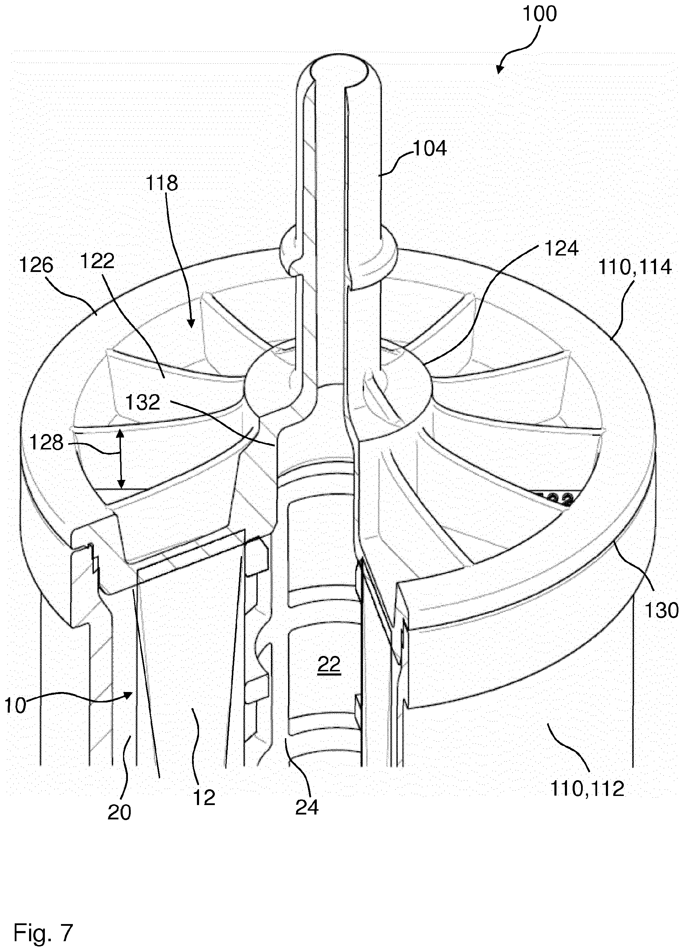

Figur 7 zeigt ein Filtersystem 100 mit einem direkt verbundenen Filterelement 10 nach einem weiteren Ausführungsbeispiel der Erfindung in einem vergrößerten Ausschnitt. In diesem Ausführungsbeispiel weist das Filterelement 10 keine auslassseitige Endscheibe 16 auf, sondern ist mit dem Filterkörper 12 direkt mit dem zweiten Gehäuseteil 114 fest verbunden. Der Filterkörper 12 kann dabei mit dem Gehäuseteil 114 verschweißt oder verklebt sein. Dabei kann beispielsweise Infrarotschweißen oder Spiegelschweißen eingesetzt werden. Durch die feste Verbindung des Filterkörpers 12 mit dem Gehäuseteil 114 ist die Abdichtung der Reinseite 22 zum Auslass 104 hin gewährleistet. Das Filterelement 10 kann auf diese Weise bei der Montage zusammen mit dem zweiten Gehäuseteil 114 gelagert und transportiert werden.

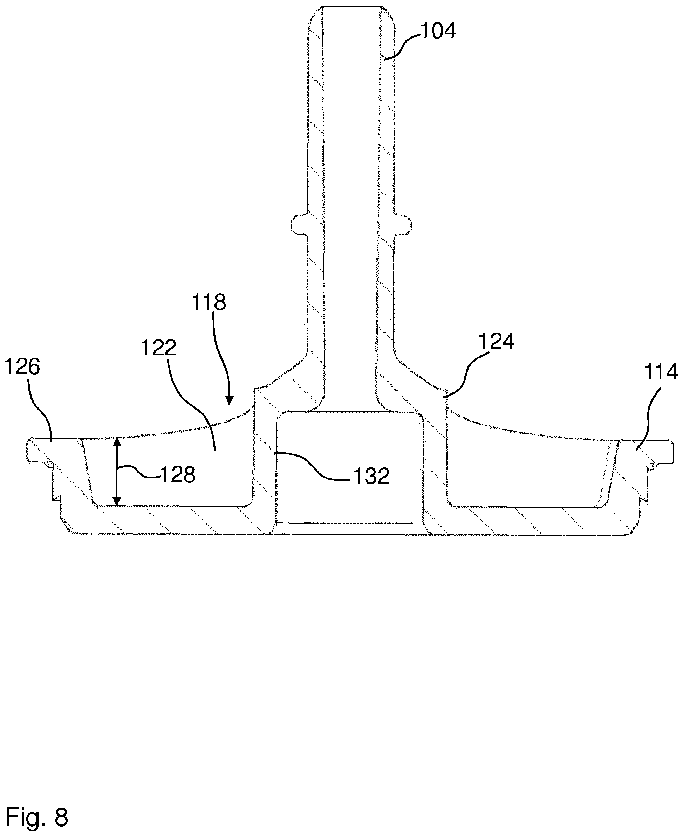

Figur 8 zeigt ein zweites Gehäuseteil 114 nach einem Ausführungsbeispiel der Erfindung im Längsschnitt. Im Schnitt ist die Ausbildung des zentralen Bereichs 124 mit der Ausnehmung 132 für die Aufnahme des Bundes 26 eines Filterelements 10 (nicht gezeigt), welche in den Auslass 104 übergeht, zu erkennen. Weiter ist der konkave, insbesondere hyperbelförmige Verlauf der Höhe 128 des an der axialen Stirnseite 118 des Gehäuseteils 114 angeordneten Versteifungselements 122 vom zentralen Bereich 124 zum Außenrand 126 hin ersichtlich. Dadurch ist eine Überleitung von Kräften bei Druckpulsationen, welche das Filtergehäuse 110 ausbeulen, von dem zentralen Bereich 124 über den Außenrand 126 auf das (nicht dargestellte) erste Gehäuseteil 112 möglich, so dass die Kräfte von dem gesamten Filtergehäuse 110 aufgenommen werden können. Auf diese Weise ist eine wirksame Versteifung des zweiten Gehäuseteils 114 als Gehäusedeckel zu erreichen.

## Patentansprüche

1. Filtergehäuse (110) für ein Filtersystem (100) zur Kraftstofffilterung, mit wenigstens einem Einlass (102) und einem Auslass (104) für ein Fluid, wobei an einem Außenumfang (116) wenigstens eines ersten Gehäuseteils (112) ein wenigstens teilweise umlaufendes Entkopplungselement (120) vorgesehen ist, welches elektrisch leitfähig ist, **dadurch gekennzeichnet, dass**
das Filtergehäuse aus Kunststoff gebildet ist, und
das Entkopplungselement (120) als Zweikomponententeil mit dem Filtergehäuse (110) in einem Zweikomponentenspritzgussprozess gefertigt ist.

2. Filtergehäuse nach Anspruch 1, wobei das E-Modul des Entkopplungselements (120) kleiner ist als das E-Modul des wenigstens ersten Gehäuseteils (112).

3. Filtergehäuse nach Anspruch 1 oder 2, wobei das Entkopplungselement (120) aus einem elektrisch leitfähigen Elastomer gebildet ist.

4. Filtergehäuse nach einem der vorhergehenden Ansprüche, wobei das Entkopplungselement (120) streifenförmig umlaufend und/oder punktförmig ausgebildet ist.

5. Filtergehäuse nach einem der vorhergehenden Ansprüche, wobei das Entkopplungselement (120) streifenförmig aufgespritzt und gegen Ablösen gesichert ist.

6. Filtergehäuse nach einem der vorhergehenden Ansprüche, wobei wenigstens ein Gehäuseteil (112, 114) an seiner axialen Stirnseite (118) außenliegende Versteifungselemente (122) aufweist, welche von einem zentralen Bereich (124) um eine Längsachse (L) radial zu einem Außenrand (126) des Gehäuseteils (112, 114) verlaufend angeordnet sind.

7. Filtergehäuse nach Anspruch 6, wobei eine Höhe (128) der Versteifungselemente (122) in Richtung der Längsachse (L) von dem zentralen Bereich (124) zum Außenrand (126) hin variiert.

8. Filtergehäuse nach Anspruch 6 oder 7, wobei die Höhe (128) der Versteifungselemente (122) von dem zentralen Bereich (124) zum Außenrand (126) nichtlinear, insbesondere konkav, insbesondere hyperbelförmig, verläuft.

9. Filtergehäuse nach einem der vorhergehenden Ansprüche, wobei das erste Gehäuseteil (112) mit dem zweiten Gehäuseteil (114) an dem Außenrand (126) verbunden ist, insbesondere verschweißt ist.

10. Filtergehäuse nach einem der vorhergehenden Ansprüche, wobei der Auslass (104) im zentralen Bereich (124) des zweiten Gehäuseteils (114) angeordnet ist.

11. Filtersystem (100) zur Kraftstofffilterung, umfassend
- ein Filterelement (10), mit einem Filterkörper (12) zwischen einer bestimmungsgemäßen Rohseite (20) und einer bestimmungsgemäßen Reinseite (22),
- ein Filtergehäuse (110) nach einem der vorhergehenden Ansprüche, in welchem Filtergehäuse (110) das Filterelement (10) angeordnet ist, wobei der Einlass (102) mit der Rohseite (20) und der Auslass (104) mit der Reinseite (22) fluidisch verbunden ist.

12. Filtersystem nach Anspruch 11, wobei das Filterelement (10) an dem zweiten Gehäuseteil (114) angeordnet ist, insbesondere lösbar mit dem zweiten Gehäuseteil (114) verbunden ist.

13. Filtersystem nach Anspruch 11, wobei das Filterelement (10), insbesondere ein Filterkörper (12), mit dem zweiten Gehäuseteil (114) fest verbunden, insbesondere verschweißt oder verklebt ist.

## Claims

1. Filter housing (110) for a filter system (100) for fuel filtration, having at least one inlet (102) and one outlet (104) for a fluid, wherein at an outer periphery (116) of at least one first housing component (112) an at least partially circumferential decoupling element (120) is provided which is electrically conductive, **characterized in that** the filter housing is made of plastic material, and that the decoupling element (120) is manufactured as two-component part with the filter housing (110) in a two-component injection molding process.

2. Filter housing according to claim 1, wherein the Young's modulus of the decoupling element (120) is smaller than the Young's modulus of the at least first housing component (112).

3. Filter housing according to claim 1 or 2, wherein the decoupling element (120) is made of an electrically conductive elastomer.

4. Filter housing according to one of the preceding claims, wherein the decoupling element (120) is strip-shaped circumferentially and/or punctiform.

5. Filter housing according to one of the preceding claims, wherein the decoupling element (120) is injection molded in a strip-shaped manner and secured against detachment.

6. Filter housing according to one of the preceding claims, wherein at least one housing component (112, 114) features at its front face (118) outside-lying stiffening elements (122) which extend radially from a central area (124) around a longitudinal axis (L) to an outer edge (126) of the housing component (112, 114).

7. Filter housing according to claim 6, wherein a height (128) of the stiffening elements (122) varies in the direction of the longitudinal axis (L) from the central area (124) to the outer edge (126).

8. Filter housing according to claim 6 or 7, wherein the height (128) of the stiffening elements (122) extends from the central area (124) to the outer edge (126) in a nonlinear, in particular concave, in particular hyperbolic manner.

9. Filter housing according to one of the preceding claims, wherein the first housing component (112) is connected, in particular welded, to the second housing component (114) at the outer edge (126).

10. Filter housing according to one of the preceding claims, wherein the outlet (104) is disposed in the central area (124) of the second housing component (114).

11. Filter system (100) for fuel filtration, comprising
- a filter element (10) with a filter body (12) between an intended raw side (20) and an intended clean side (22),
- a filter housing (110) according to one of the preceding claims, in which filter housing (110) the filter element (10) is disposed, wherein the inlet (102) is fluidly connected to the raw side (20) and the outlet (104) is fluidly connected to the clean side (22).

12. Filter system according to claim 11, wherein the filter element (10) is disposed at the second housing component (114), in particular connected detachably to the second housing component (114).

13. Filter system according to claim 11, wherein the filter element (10), in particular a filter body (12), is firmly connected to the second housing component (114), in particular welded or glued.

## Revendications

1. Boîtier de filtre (110) pour un système de filtre (100) en vue de la filtration de carburant, ayant au moins une entrée (102) et une sortie (104) pour un fluide, un élément de découplage (120) au moins en partie circonférentiel étant prévu sur une circonférence extérieure (116) d'au moins un premier composant de boîtier (112), cet élément de découplage étant électroconducteur, **caractérisé en ce que** le boîtier de filtre est constitué de matière plastique et que l'élément de découplage (120) est fabriqué par injection en bi-composant en tant que pièce bi-composant avec le boîtier de filtre (110).

2. Boîtier de filtre selon la revendication 1, le module de Young de l'élément de découplage (120) étant plus petit que le module de Young du premier composant de boîtier (112), au moins au nombre d'un.

3. Boîtier de filtre selon la revendication 1 ou 2, l'élément de découplage (120) étant fait d'un élastomère électroconducteur.

4. Boîtier de filtre selon l'une des revendications précédentes, l'élément de découplage (120) étant exécuté de manière circonférentielle en forme de bandes et/ou en forme de points.

5. Boîtier de filtre selon l'une des revendications précédentes, l'élément de découplage (120) étant injecté en forme de bandes et protégé contre le détachement.

6. Boîtier de filtre selon l'une des revendications précédentes, au moins un composant de boîtier (112, 114) présentant sur sa face frontale axiale (118) des éléments de renfort extérieurs (122) qui évoluent d'une zone centrale (124), autour d'un axe longitudinal (L), en sens radial vers un bord extérieur (126) du composant de boîtier (112, 114).

7. Boîtier de filtre selon la revendication 6, une hauteur (128) des éléments de renfort (122) variant en direction de l'axe longitudinal (L) de la zone centrale (124) vers le bord extérieur (126).

8. Boîtier de filtre selon la revendication 6 ou 7, la hauteur (128) des éléments de renfort (122) évoluant de manière non linéaire, notamment concave, notamment hyperbolique, de la zone centrale (124) vers le bord extérieur (126).

9. Boîtier de filtre selon l'une des revendications précédentes, le premier composant de boîtier (112) étant relié, notamment soudé, au second composant de boîtier (114) au niveau du bord extérieur (126).

10. Boîtier de filtre selon l'une des revendications précédentes, la sortie (104) étant placée dans la zone centrale (124) du second composant de boîtier (114).

11. Système de filtre (100) en vue de la filtration de carburant, comprenant
- un élément filtrant (10), avec un corps de filtre (12) entre un côté brut (20) conforme à l'utilisation et un coté pur (22) conforme à l'utilisation,
- un boîtier de filtre (110) selon l'une des revendications précédentes, l'élément filtrant (10) étant disposé dans ledit boîtier de filtre (110), l'entrée (102) étant reliée au côté brut (20) et la sortie (104) étant reliée fluidiquement au côté pur (22).

12. Système de filtre selon la revendication 11, l'élément filtrant (10) étant disposé sur le second composant de boîtier (114), notamment étant relié de manière amovible au second composant de boîtier (114).

13. Système de filtre selon la revendication 11, l'élément filtrant (10), notamment un corps de filtre (12), étant relié de manière fixe, notamment soudé ou collé, au second composant de boîtier (114).
